# EUROPEAN PATENT APPLICATION

(11) **EP 1 657 809 A1**
(43) Date of publication of application: **17.05.2006**
(21) Application number: 04718423.9
(22) Date of filing: 08.03.2004
(51) Int. Cl.: H02M 7/48

(54) **POWER CONVERTER, MOTOR DRIVE, BTB SYSTEM AND SYSTEM LINKING INVERTER SYSTEM**

(30) Priority: 22.08.2003 JP 2003298852
(71) Applicant: The Circle for the Promotion of Science and Engineering, Tokyo 152-8550 (JP)
(72) Inventor: AKAGI, Hirofumi, c/o Tokyo Institute Of Technology, Meguro-ku, Tokyo 1528550 (JP)
(74) Representative: Rapp, Bertram
(86) International application number: PCT/JP2004/002962
(87) International publication number: WO 2005/020420

(57) **Abstract**

The invention provides a bidirectional power converter, that can be connected directly to an AC system without interposing a transformer, that is small in size, light in weight, inexpensive to manufacture, and capable of regenerative operation, and also provides a motor drive equipped with such a power converter and a BTB system and a grid-linking inverter system each comprising such a power converter. The power converter comprises converter cells each comprising: a first AC/DC converter which performs bidirectional power conversion between single-phase AC power and DC power; a second AC/DC converter whose DC side is connected to the DC side of the first AC/DC converter, and which performs bidirectional power conversion between single-phase AC power and DC power; a third AC/DC converter which performs bidirectional power conversion between single-phase AC power and DC power; and a high-frequency transformer which is connected between the AC side of the second AC/DC converter and the AC side of the third AC/DC converter. If the power converter 1 is an AC-input/AC-output type, the power converter further comprises a fourth AC/DC converter which is connected to the DC side of the third AC/DC converter, and which performs bidirectional power conversion between single-phase AC power and DC power.

## Description

### TECHNICAL FIELD

The present invention relates to an AC-input/AC-output bidirectional power converter, a motor drive equipped with such a power converter, and a BTB system comprising such a power converter, and also relates to a bidirectional power converter for converting power between AC and DC, a motor drive equipped with such a power converter, and a grid-linking inverter system comprising such a power converter.

### BACKGROUND ART

In a power distribution system, a BTB (Back-To-Back) system and a grid-linking inverter system are examples of power-related equipment constructed using a plurality of power converters. Of these, the BTB system is an apparatus, in which two power converters constructed with semiconductor switches are connected in a back-to-back configuration, which has the function of first converting AC to DC and then converting the DC back to AC. The BTB system is used as grid-linking equipment for linking between AC systems operating at the same frequency or as frequency conversion equipment for linking between AC systems operating at different frequencies.

The BTB system is also used as a drive apparatus for an AC motor, in which case a variable speed control, and a regenerative operation of the AC motor drive, become possible.

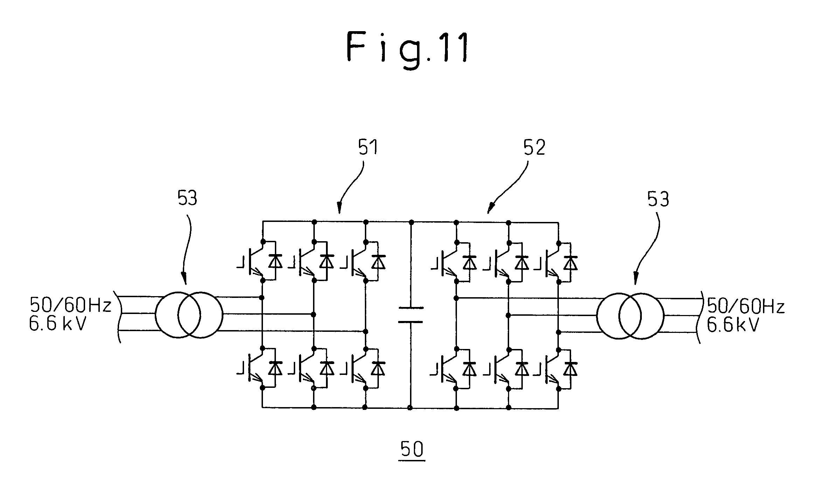

Figure 11 is a main circuit diagram of a conventional BTB system used in a power distribution system.

In the system shown here, a 6.6-kV AC voltage, at 50/60 Hz, is first lowered by a line-frequency transformer 53 and then input to a bidirectional power converter 50 which is constructed by connecting two two-or three-level voltage-type PWM converters 51 and 52 in a back-to-back configuration. Here, the line-frequency transformer 53 is interposed for connection to the AC system, not only to lower and/or raise the AC voltage but also to provide electrical isolation between the power converter and the AC system.

There are also proposed a variety of multi-level converters in order to reduce harmonic voltages associated with the use of voltage converters.

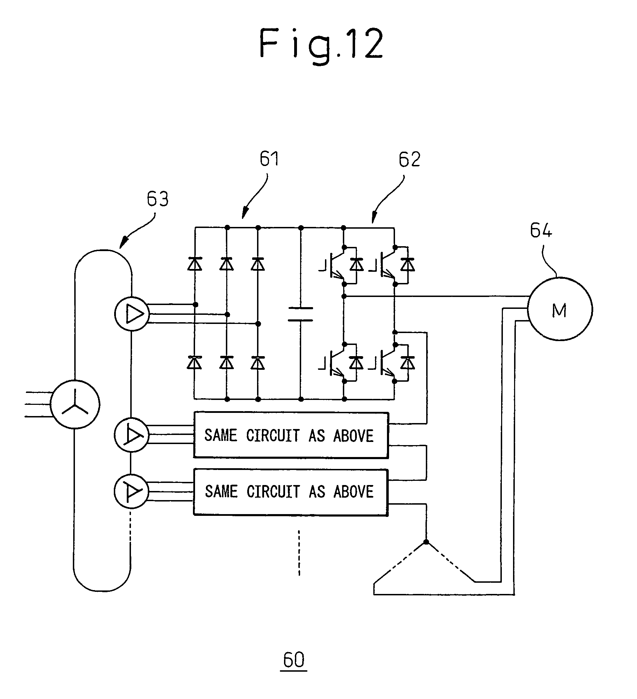

Figure 12 is a main circuit diagram of a high-voltage direct drive system according to the prior art.

Shown in the figure is the high-voltage direct drive system 60 described in U.S. Patent No. 5625545, which is a variable-speed drive system for an AC motor 64. As shown, a plurality of rectifier/inverter sets each comprising a diode rectifier 61 and an inverter 62 are connected to the secondary insulated windings of a multi-winding transformer (50/60 Hz) (reference numeral 63). Then, the AC outputs of the plurality of inverters 62 are connected in series. Accordingly, a high-voltage output can be easily obtained by increasing the number of series-connected inverters 62. Further, this AC output voltage produces a multi-level waveform, and harmonic voltages can be greatly reduced compared with a two-level inverter system.

In the case of the BTB system described above, a line-frequency transformer must be interposed between the AC system and the power converter in order to provide electrical isolation between them. However, as the line-frequency transformer is large and heavy, the entire system becomes large and heavy. Here, if the power converter is connected directly to the AC system without interposing such a line-frequency transformer, the fundamental component of the zero-phase current may circulate between feeders, causing malfunctioning of a ground protection relay, unless the interconnection reactance or feeder impedance is balanced between the phases.

On the other hand, in the case of the high-voltage direct drive system described above, the multi-winding transformer has an extremely complex winding structure and is very expensive. Furthermore, the multi-winding transformer occupies a large proportion of the entire system in terms of volume as well as weight. In addition, as can be seen from the main circuit diagram, the rotational energy during deceleration of the AC motor cannot be recovered and returned to the power supply.

Further, in the case of the system comprising a plurality of converters, there is the problem that as the number of power converters connected increases, the number of switching devices increases and, as a result, switching losses increase and the conversion efficiency drops.

Accordingly, in view of the above problems, a first object of the present invention is to provide an AC-input/AC-output bidirectional power converter that can be connected directly to an AC system without interposing a transformer and that is small in size, light in weight, inexpensive to manufacture, and capable of regenerative operation, and also provide a motor drive equipped with such a power converter and a BTB system comprising such a power converter.

Further, in view of the above problems, a second object of the present invention is to provide a bidirectional power converter that can be connected directly to an AC system without interposing a transformer and that is small in size, light in weight, and inexpensive to manufacture, and also provide a motor drive equipped with such a power converter and a grid-linking inverter system comprising such a power converter.

### DISCLOSURE OF THE INVENTION

To achieve the above objects, the present invention constructs a power converter by using a plurality of AC/DC converters and a high-frequency transformer.

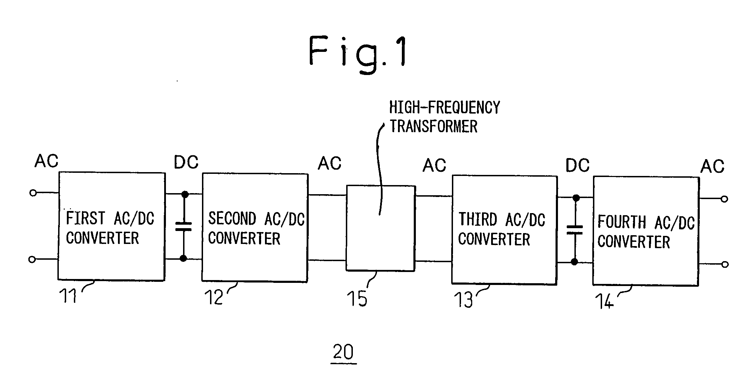

Figure 1 is a schematic circuit diagram showing a converter cell in a power converter according to a first mode of the present invention. It is to be understood that, in the different drawings given hereinafter, the same reference numerals designate the same component elements.

The AC-input/AC-output bidirectional power converter 1 comprises a converter cell 20 which comprises: a first AC/DC converter 11 which performs bidirectional power conversion between single-phase AC power and DC power; a second AC/DC converter 12 whose DC side is connected to the DC side of the first AC/DC converter 11, and which performs bidirectional power conversion between single-phase AC power and DC power; a third AC/DC converter 13 which performs bidirectional power conversion between single-phase AC power and DC power; a fourth AC/DC converter 14 whose DC side is connected to the DC side of the third AC/DC converter 13, and which performs bidirectional power conversion between single-phase AC power and DC power; and a high-frequency transformer 15 which is connected between the AC side of the second AC/DC converter 12 and the AC side of the third AC/DC converter 13.

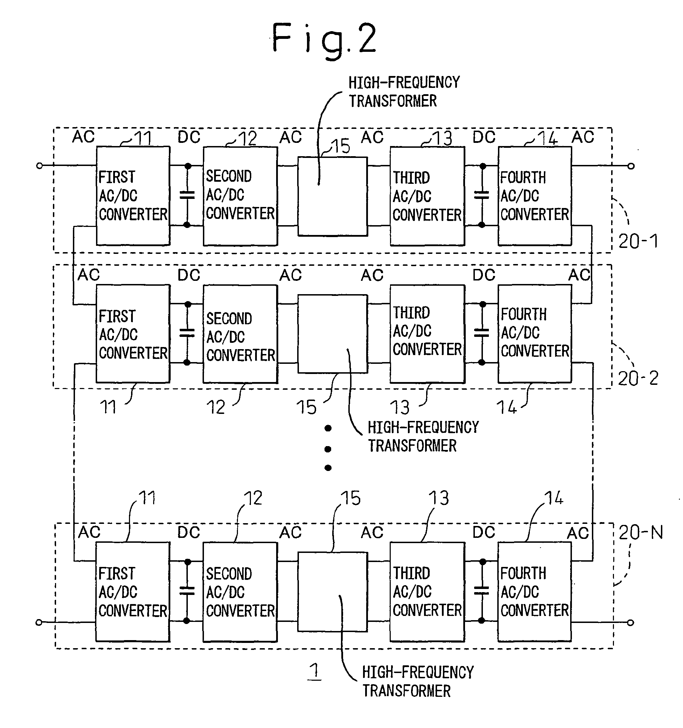

Figure 2 is a schematic circuit diagram showing the power converter according to the first mode of the present invention, comprising a plurality of converter cells.

As shown, in the power converter comprising the plurality of converter cells 20-1, 20-2, ..., 20-N (where N is a natural number not smaller than 2) according to the first mode of the present invention, the AC nodes of the first AC/DC converters 11 in the plurality of converter cells 20-1, 20-2, ..., 20-N are connected in series with each other, and the AC nodes of the fourth AC/DC converters 14 in the plurality of converter cells are connected in series with each other. As the number of series-connected converter cells increases, the number of AC voltage levels increases (multiple voltage levels). The circuit configuration of each of the converter cells 20-1, 20-2, ..., 20-N is the same as that described with reference to Figure 1.

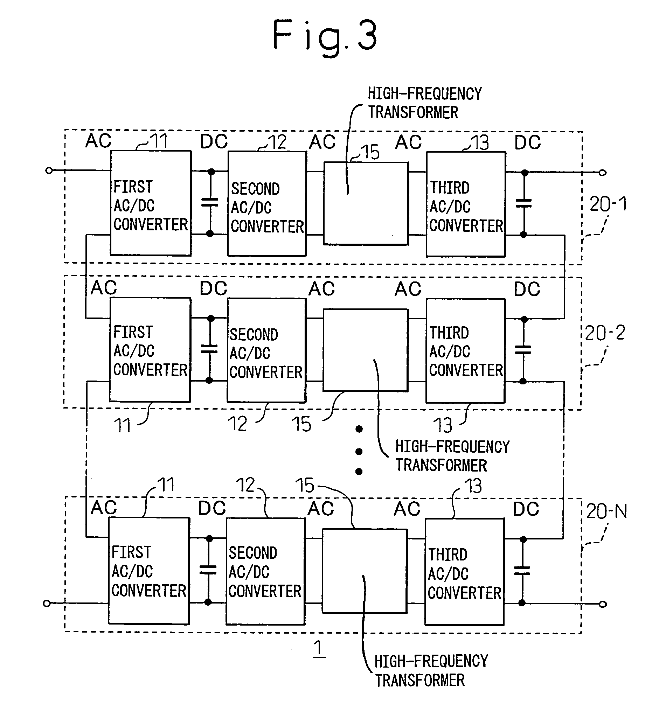

Figure 3 is a schematic circuit diagram showing a power converter according to a second mode of the present invention, comprising a plurality of converter cells whose DC nodes are connected in series with each other.

As shown, according to the second mode of the present invention, the bidirectional power converter 1 for performing bidirectional power conversion between AC and DC comprises converter cells 20, each of the cells comprising: a first AC/DC converter 11 which performs bidirectional power conversion between single-phase AC power and DC power; a second AC/DC converter 12 whose DC side is connected to the DC side of the first AC/DC converter 11, and which performs bidirectional power conversion between single-phase AC power and DC power; a third AC/DC converter 13 which performs bidirectional power conversion between single-phase AC power and DC power; and a high-frequency transformer 14 which is connected between the AC side of the second AC/DC converter 12 and the AC side of the third AC/DC converter 13.

In the power converter 1 comprising the plurality of converter cells 20-1, 20-2, ..., 20-N (where N is a natural number not smaller than 2), the AC nodes of the first AC/DC converters 11 in the plurality of converter cells 20-1, 20-2, ..., 20-N are connected in series with each other, and the DC nodes of the third AC/DC converters 13 in the plurality of converter cells are connected in series with each other.

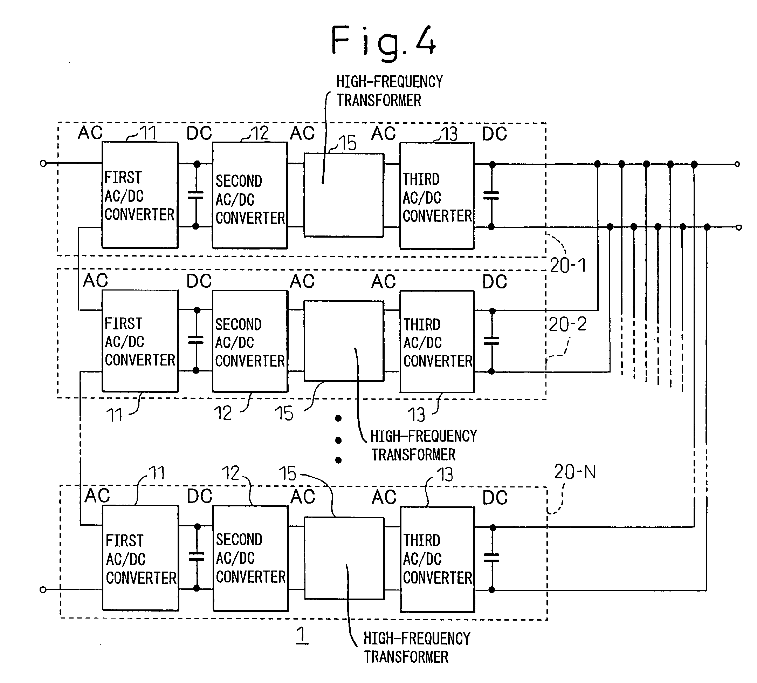

Figure 4 is a schematic circuit diagram showing the power converter according to the second mode of the present invention in which the DC sides of the plurality of converter cells are connected in parallel.

As shown, according to the third mode of the present invention, the bidirectional power converter 1 for performing bidirectional power conversion between AC and DC comprises converter cells 20, each of the cells comprising: a first AC/DC converter 11 which performs bidirectional power conversion between single-phase AC power and DC power; a second AC/DC converter 12 whose DC side is connected to the DC side of the first AC/DC converter 11, and which performs bidirectional power conversion between single-phase AC power and DC power; a third AC/DC converter 13 which performs bidirectional power conversion between single-phase AC power and DC power; and a high-frequency transformer 14 which is connected between the AC side of the second AC/DC converter 12 and the AC side of the third AC/DC converter 13.

In the power converter 1 comprising the plurality of converter cells 20-1, 20-2, ..., 20-N (where N is a natural number not smaller than 2), the AC nodes of the first AC/DC converters 11 in the plurality of converter cells 20-1, 20-2, ..., 20-N are connected in series with each other, and the DC sides of the third AC/DC converters 13 in the plurality of converter cells are connected in parallel.

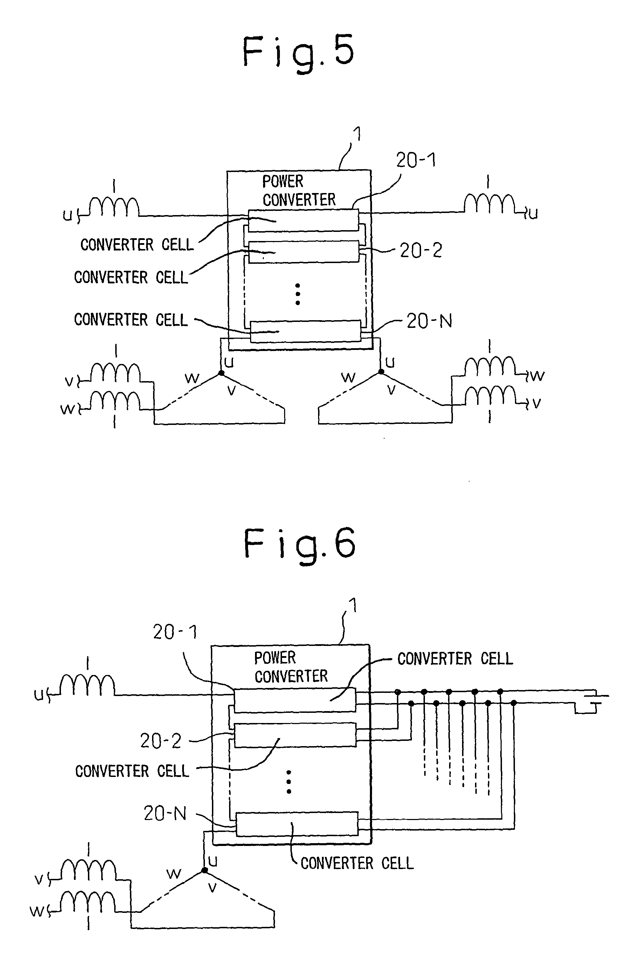

Figure 5 is a schematic circuit diagram showing a configuration in which the power converter according to the first mode of the present invention is connected to a three-phase AC power supply system.

In the figure, the phases of the three-phase AC power supply system are designated as u, v, and w, respectively, and the reactance component of each phase is denoted as reactor 1. When connecting the power converter 1 according to the first mode of the present invention to the three-phase AC power supply system, the power converter 1 is directly connected in each phase to the three-phase AC power supply system. In Figure 5, only the power converter 1 connected to the u phase is shown. However, the connection configuration is the same for the v and w phases also, but is not shown here for simplicity of illustration.

As earlier described, the AC nodes of the first AC/DC converters 11 in the plurality of converter cells 20-1, 20-2, ..., 20-N contained in one power converter 1 are connected in series with each other, and the AC nodes of the fourth AC/DC converters 14 in the plurality of converter cells are connected in series with each other. Of these, the converter cells that have terminals for connecting the power converter 1 to the external circuit are the converter cells 20-1 and 20-N in Figure 5; here, the external circuit connection terminals of the converter cell 20-1 are connected to the AC power supply system, while the external circuit connection terminals of the converter cell 20-N are connected to the other phases in a star connection. In Figure 5, the AC side of the power converter 1 is connected in a star connection, but may instead be connected in a delta connection.

The circuit configuration of Figure 5 also applies to the case where the power converter, comprising the plurality of converter cells whose DC nodes are connected in series with each other according to the second mode of the present invention, is connected between a three-phase AC power system and a DC system.

Figure 6 is a schematic circuit diagram showing a configuration in which the power converter comprising the plurality of converter cells whose DC sides are connected in parallel in the second mode of the present invention is connected between a three-phase AC power system and a DC system.

In this case, in the power converter 1 according to the second mode of the present invention, the AC sides of the converter cells 20-1, 20-2, ..., 20-N are directly connected in each phase to the three-phase AC power system. On the other hand, the DC sides of the converter cells 20-1, 20-2, ..., 20-N are connected in parallel and coupled to the DC system. In Figure 6, only the power converter 1 connected to the u phase is shown. However, the connection configuration is the same for the v and w phases also, but is not shown here for simplicity of illustration.

Preferably, each AC/DC converter described above comprises switching devices formed from a semiconductor having a wide energy band. A wide-energy-gap semiconductor device is one example of such a switching device.

The power converters according to the first and second modes of the present invention can each be used as a motor drive for performing variable speed control of an AC motor.

The power converter according to the first mode of the present invention can also be used as a BTB system.

The power converter according to the second mode of the present invention can also be used as a grid-linking inverter system for linking between a DC system and an AC system.

According to the first mode of the present invention, the AC-input/AC-output bidirectional power converter can be connected directly to an AC system without interposing a transformer, is inexpensive to manufacture, and can be made small and light in construction. Power flow is bidirectional, and power regeneration is possible.

According to the second mode of the present invention, the bidirectional power converter for performing bidirectional power conversion between AC and DC can be connected directly to an AC system without interposing a transformer, is inexpensive to manufacture, and can be made small and light in construction. Power flow is bidirectional, and power regeneration is possible.

In the present invention, the electrical isolation between the line power source or load side and the power converter is provided by the high-frequency transformer contained in the power converter, not by a line-frequency converter which would have to be interposed between the power converter and the line power source in the prior art. As the high-frequency transformer is smaller and lighter than the line-frequency converter, the power converter of the present invention can be made smaller in size and lighter in weight.

Further, in the present invention, by using super low-loss switching devices as the switching devices in the AC/DC converters provided in the power converter, cooling devices and heat radiating fins can also be reduced in size.

According to the present invention, as the number of converter cells connected in series in the power converter increases, the number of AC voltage waveform levels increases. That is, in the present invention, by connecting the plurality of converter cells in series, a good AC voltage waveform relatively free from harmonics can be obtained; as a result, switching ripples of the switching devices in the power converter can be completely suppressed by the grid-linking reactor alone, and there is no need to provide a switching ripple limiting passive filter.

The power converter according to the first mode of the present invention can be used as a BTB system, and the power converter according to the second mode of the present invention can be used as a grid-linking inverter system.

Further, if an AC motor is connected to one end of the power converter of the present invention, variable speed control of the AC motor becomes possible; therefore, the power converter can also be used as a motor drive. In this case, an environmentally friendly motor drive can be achieved because EMI measures or measures to suppress harmonics are not particularly needed.

### BRIEF DESCRIPTION OF THE DRAWINGS

Figure 1 is a schematic circuit diagram showing a converter cell in a power converter according to a first mode of the present invention.
Figure 2 is a schematic circuit diagram showing the power converter according to the first mode of the present invention, comprising a plurality of converter cells.
Figure 3 is a schematic circuit diagram showing a power converter according to a second mode of the present invention, comprising a plurality of converter cells whose DC nodes are connected in series with each other.
Figure 4 is a schematic circuit diagram showing the power converter according to the second mode of the present invention in which the DC sides of the plurality of converter cells are connected in parallel.
Figure 5 is a schematic circuit diagram showing a configuration in which the power converter according to the first mode of the present invention is connected to a three-phase AC power supply system.
Figure 6 is a schematic circuit diagram showing a configuration in which the power converter comprising the plurality of converter cells whose DC sides are connected in parallel in the second mode of the present invention is connected between a three-phase AC power system and a DC system.
Figure 7 is a main circuit diagram showing a portion of the power converter according to an embodiment of the present invention.
Figure 8 is a circuit diagram showing a block having a bidirectional isolation DC/DC converter structure in the main circuit of the power converter according to the embodiment of the present invention: part (a) shows a non-resonating-type bidirectional isolation DC/DC converter, and part (b) shows a resonating-type bidirectional isolation DC/DC converter.
Figure 9 is a diagram showing by way of example the design parameters of the power converter according to the embodiment of the present invention.
Figure 10 is a diagram showing, by way of example, phase voltage waveforms synthesized by simulation in the power converter in which four converter cells per phase are connected in series: part (a) shows the phase voltage in u phase, (b) the phase voltage in v phase, and (c) the phase voltage in w phase.
Figure 11 is a main circuit diagram of a conventional BTB system used in a power distribution system.
Figure 12 is a main circuit diagram of a high-voltage direct drive system according to the prior art.

### BEST MODE FOR CARRYING OUT THE INVENTION

An embodiment of the present invention will be described in connection with the first mode of the invention described above, but it will be appreciated that the second mode can also be carried out in like manner.

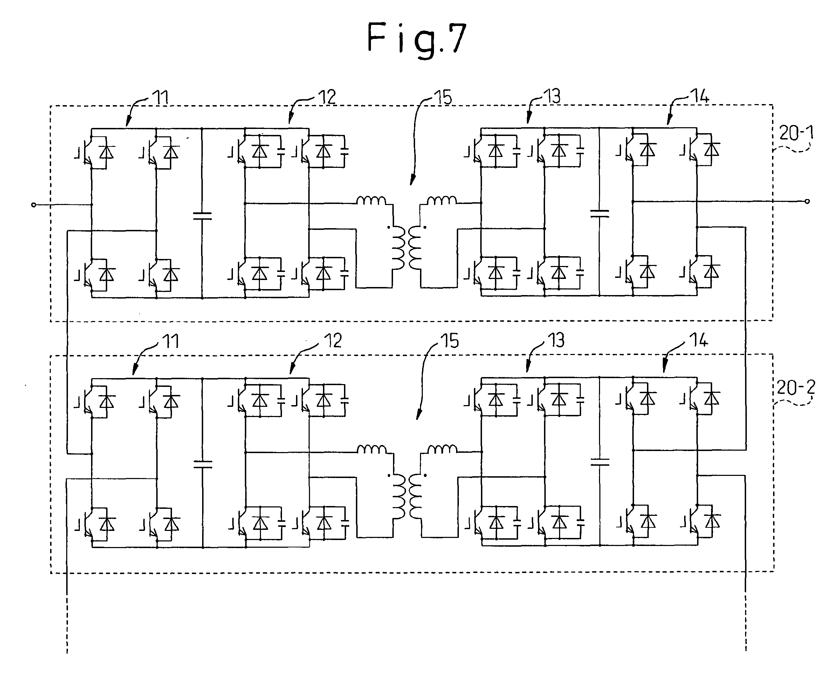

Figure 7 is a main circuit diagram showing a portion of the power converter according to the embodiment of the present invention.

The main circuit of the power converter 1 comprises N converter cells per phase, with the AC nodes of the converter cells connected in series with each other. For simplicity of illustration, Figure 7 shows only the converter cell 20-1 and the converter cell 20-2 connected in series to it.

In the present embodiment, the first to fourth AC/DC converters 11 to 14 are implemented using single-phase voltage-type PWM converters. The high-frequency transformer 15 is connected between the AC side of the second AC/DC converter 12 and the AC side of the third AC/DC converter 13. A smoothing capacitor is provided on the DC side of the first and second AC/DC converters 11 and 12, as well as on the DC side of the third and fourth AC/DC converters 13 and 14.

Preferably, the switching devices in each AC/DC converter are formed from a semiconductor having a wide energy band. That is, a semiconductor having lower loss than the currently predominant Si (silicon) is preferred for use; more particularly, a wide-energy-gap semiconductor, such as SiC (silicon carbide), GaN (gallium nitride), or diamond, is preferred for use. In wide-energy-gap semiconductors, the energy band between the forbidden band and the conduction band is wide; in fact, it is about three times as wide as that of Si. However, even in the case of Si, switching devices that can suffice the purpose of the present invention can be achieved if recently developed low-loss, high-speed switching devices are used.

In Figure 7, the switching devices in each AC/DC converter are each designated using an IGBT (Insulated Gate Bipolar Transistor) symbol, but switching devices (power devices) having super low-loss, high-speed switching characteristics, such as SiC-MOSFET or SIC-JFET, may be used in the present embodiment.

SiC has excellent physical properties, exhibiting about 10 times greater dielectric breakdown strength, about two times faster saturated electron velocity, and about three times higher thermal conductivity than Si, and the coefficient of performance of SiC as a switching device is more than two orders of magnitude higher than that of Si. Accordingly, the ON resistance of switching devices formed from SiC can be reduced to about 1/200 of that of switching devices formed from the currently predominant Si, and thus, super low-loss, high-speed switching, and high-voltage breakdown MOSFETs, JFETs (SITs), and Schottky barriers can be achieved.

Further, in the case of GaN-HEMT (High Electron Mobility Transistor), a device having a breakdown voltage of 1300 V is already developed, and the ON resistance of this device is 1.7 mΩcm² (the ON voltage is 0.17 V at 100 A/cm²). Since the ON voltage is less than 1/10 of that a Si-IGBT having a breakdown voltage of 1200 V, it can be said that the above device is one of the switching devices suitable for use in the present invention.

As the conduction losses and switching losses of the super low-loss switching devices described above are less than 1/10 of those of the switching devices formed from the currently predominant Si, cooling devices and heat radiating fins can be significantly reduced in size when such super low-loss switching devices are used.

On the other hand, the intermediate frequency of the high-frequency transformer should preferably be set higher than the upper limit frequency of the audible range, i.e., 20 kHz, by considering the problem of noise, though it depends on such factors as the switching devices used and the converter capacity. The electrical isolation between the line power source or load side and the power converter is provided by this high-frequency transformer.

For the iron core of the high-frequency transformer, a magnetic material such as an amorphous material having low core loss is suitable for use. As the high-frequency transformer is smaller and lighter than a line-frequency transformer, in this point also the power converter of the present embodiment can be made smaller in size and lighter in weight than the prior art construction.

In the power converter of the present embodiment shown in Figure 7, the second AC/DC converter 12, the high-frequency transformer 15, and the third AC/DC converter 13 together have a structure similar to that of the generally known bidirectional isolation DC/DC converter, and it may be said that the power converter has a circuit configuration such that the first and fourth AC/DC converters 11 and 14 as single-phase bridge voltage-type PWM converters are respectively connected in cascade to the DC sides of the bidirectional isolation DC/DC converter.

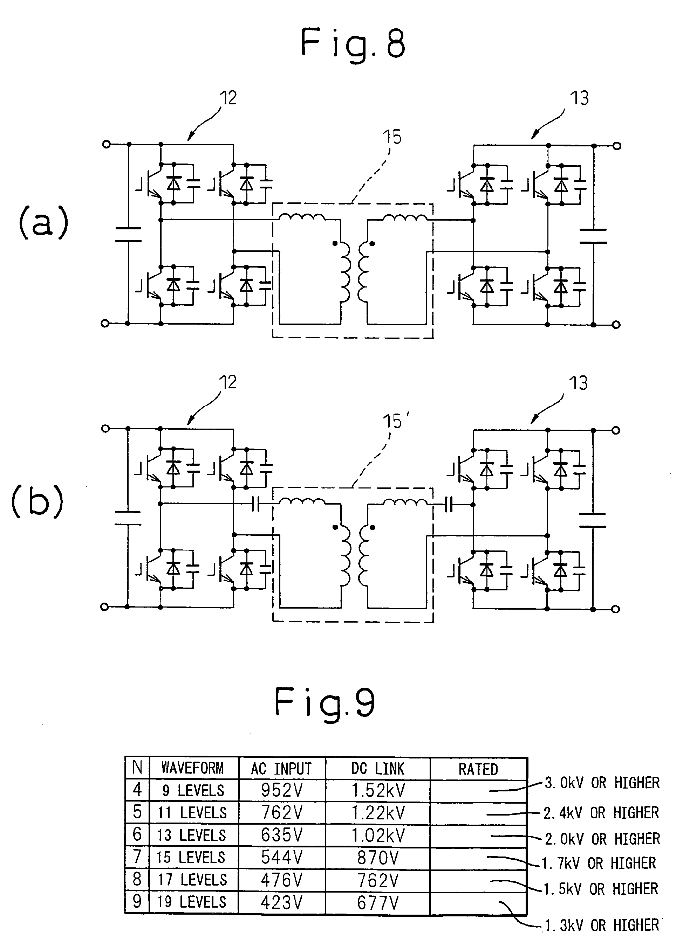

Figure 8 is a circuit diagram showing the block having the bidirectional isolation DC/DC converter structure in the main circuit of the power converter according to the embodiment of the present invention: part (a) shows a non-resonating-type bidirectional isolation DC/DC converter, and part (b) shows a resonating-type bidirectional isolation DC/DC converter.

In Figure 8, when power flow is directed from left to right, the second AC/DC converter 12 operates as a square-wave voltage-source inverter with 180-degree conduction (non-PWM inverter), and the third AC/DC converter 13 operates as a diode rectifier circuit or a synchronous rectifier circuit. As a result, the capacitor connected in parallel to each switching device acts as a so-called lossless snubber, and is thus effective in suppressing the dv/dt and reducing the switching loss of the switching device.

Compared with the non-resonating type shown in Figure 8(a), the resonating type shown in Figure 8(b) somewhat increases in volume and weight because of the inclusion of resonant capacitors, but the switching loss is reduced. In the power converter shown in Figure 7, the non-resonating-type structure shown in Figure 8(a) is employed. However, instead, a resonating-type structure shown in Figure 8(b) may be employed.

As described above, the power converter 1 of the present embodiment comprises N converter cells per phase, with the AC nodes of the converter cells connected in series with each other. Figure 9 is a diagram showing by way of example the design parameters of the power converter according to the embodiment of the present invention. The figure shows the number of AC voltage waveform levels, the root-mean-square value (effective value) of the AC input voltage, the voltage value of the DC link, and the rated voltage of the switching device when the number of converter cells per phase is N in the power converter connected to a line voltage of 6.6 kV. The number of AC voltage waveform levels increases as the number of series-connected converter cells increases.

For example, when four converter cells are connected in series in each phase, the root-mean-square value of the AC voltage of the converter cell is given as 6600/4√3 = 952 V. Here, the DC link voltage value of the converter cell is 1.52 kV which is 1.6 times the root-mean-square value of the AC voltage of the converter cell. If the required breakdown voltage of the switching device is two times the DC link voltage value, then the switching device is required to have a breakdown voltage as high as 3.0 kV.

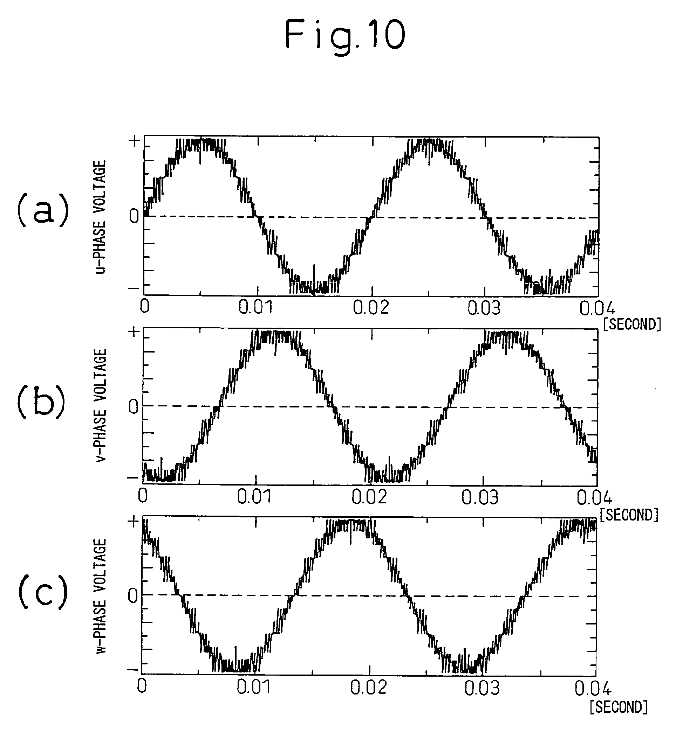

Figure 10 is a diagram showing, by way of example, phase voltage waveforms synthesized by simulation in a power converter in which four converter cells per phase are connected in series: part (a) shows the phase voltage in u phase, (b) the phase voltage in v phase, and (c) the phase voltage in w phase.

The phase voltage waveform obtained by combining the AC voltages from the four converter cells has nine levels as shown; even when the carrier frequency of the single-phase bridge voltage-type PWM converter is about 450 Hz, a good AC voltage waveform relatively free from harmonics can be obtained. Accordingly, switching ripples can be completely suppressed by the grid-linking reactor alone, and there is no need to provide a switching ripple limiting passive filter.

The power converter according to the embodiment of the present invention described above can be used as a BTB system.

Further, if an AC motor is connected to one end of the power converter of the present embodiment, variable speed control of the AC motor becomes possible; therefore, the power converter can also be used as a motor drive. Power flow is bidirectional, and power regeneration is possible. In this case, an environmentally friendly motor drive can be achieved because EMI measures or measures to suppress harmonics are not particularly needed.

The power converter according to the present invention can be used as a grid-linking inverter system as well as a BTB system.

Further, if an AC motor is connected to one end of the power converter of the present invention, variable speed control of the AC motor becomes possible; therefore, the power converter can also be used as a motor drive. In this case, an environmentally friendly motor drive can be achieved because EMI measures or measures to suppress harmonics are not particularly needed.

## Claims

1. An AC-input/AC-output bidirectional power converter comprising converter cells, each of said cells comprising:
a first AC/DC converter which performs bidirectional power conversion between single-phase AC power and DC power;
a second AC/DC converter whose DC side is connected to the DC side of said first AC/DC converter, and which performs bidirectional power conversion between single-phase AC power and DC power;
a third AC/DC converter which performs bidirectional power conversion between single-phase AC power and DC power;
a fourth AC/DC converter whose DC side is connected to the DC side of said third AC/DC converter, and which performs bidirectional power conversion between single-phase AC power and DC power; and
a high-frequency transformer which is connected between the AC side of said second AC/DC converter and the AC side of said third AC/DC converter.

2. A power converter as claimed in claim 1, wherein the AC nodes of said first AC/DC converters in said plurality of converter cells are connected in series with each other, and the AC nodes of said fourth AC/DC converters in said plurality of converter cells are connected in series with each other.

3. A power converter as claimed in claim 1 or 2, wherein said power converter is directly connected, in each phase, to a three-phase AC power supply system.

4. A bidirectional power converter for performing bidirectional power conversion between AC and DC, comprising converter cells, each of said cells comprising:
a first AC/DC converter which performs bidirectional power conversion between single-phase AC power and DC power;
a second AC/DC converter whose DC side is connected to the DC side of said first AC/DC converter, and which performs bidirectional power conversion between single-phase AC power and DC power;
a third AC/DC converter which performs bidirectional power conversion between single-phase AC power and DC power; and
a high-frequency transformer which is connected between the AC side of said second AC/DC converter and the AC side of said third AC/DC converter.

5. A power converter as claimed in claim 4, wherein the AC nodes of said first AC/DC converters in said plurality of converter cells are connected in series with each other, and the DC nodes of said third AC/DC converters in said plurality of converter cells are connected in series with each other.

6. A power converter as claimed in claim 4, wherein the AC nodes of said first AC/DC converters in said plurality of converter cells are connected in series with each other, and the DC nodes of said third AC/DC converters in said plurality of converter cells are connected in parallel with each other.

7. A power converter as claimed in any one of claims 4 to 6, wherein the AC side of said power converter is directly connected in each phase to a three-phase AC power supply system.

8. A motor drive equipped with a power converter as claimed in any one of claims 1 to 7.

9. A BTB system comprising a power converter as claimed in any one of claims 1 to 3.

10. A grid-linking inverter system for linking between a DC system and an AC system, comprising a power converter as claimed in any one of claims 4 to 7.

## Amended claims

### Amended claims under Art. 19.1 PCT

**1.** (AMENDED) An AC-input/AC-output bidirectional power converter comprising converter cells, each of said cells comprising:
a first AC/DC converter which performs bidirectional power conversion between single-phase AC power and DC power;
a second AC/DC converter whose DC side is connected to the DC side of said first AC/DC converter, and which performs bidirectional power conversion between single-phase AC power and DC power;
a third AC/DC converter which performs bidirectional power conversion between single-phase AC power and DC power;
a fourth AC/DC converter whose DC side is connected to the DC side of said third AC/DC converter, and which performs bidirectional power conversion between single-phase AC power and DC power; and
a high-frequency transformer which is connected between the AC side of said second AC/DC converter and the AC side of said third AC/DC converter, wherein
the AC nodes of said first AC/DC converters in said plurality of converter cells are connected in series with each other, and the AC nodes of said fourth AC/DC converters in said plurality of converter cells are connected in series with each other.

**2.** (AMENDED) A power converter as claimed in claim 1, wherein said power converter is directly connected in each phase to a three-phase AC power supply system.

**3.** (AMENDED) A bidirectional power converter for performing bidirectional power conversion between AC and DC, comprising converter cells, each of said cells comprising:
a first AC/DC converter which performs bidirectional power conversion between single-phase AC power and DC power;
a second AC/DC converter whose DC side is connected to the DC side of said first AC/DC converter, and which performs bidirectional power conversion between single-phase AC power and DC power;
a third AC/DC converter which performs bidirectional power conversion between single-phase AC power and DC power; and
a high-frequency transformer which is connected between the AC side of said second AC/DC converter and the AC side of said third AC/DC converter, wherein
the AC nodes of said first AC/DC converters in said plurality of converter cells are connected in series with each other, and the DC nodes of said third AC/DC converters in said plurality of converter cells are connected in series with each other.

**4.** (AMENDED) A bidirectional power converter for performing bidirectional power conversion between AC and DC, comprising converter cells, each of said cells comprising:
a first AC/DC converter which performs bidirectional power conversion between single-phase AC power and DC power;
a second AC/DC converter whose DC side is connected to the DC side of said first AC/DC converter, and which performs bidirectional power conversion between single-phase AC power and DC power;
a third AC/DC converter which performs bidirectional power conversion between single-phase AC power and DC power; and
a high-frequency transformer which is connected between the AC side of said second AC/DC converter and the AC side of said third AC/DC converter, wherein
the AC nodes of said first AC/DC converters in said plurality of converter cells are connected in series with each other, and the DC nodes of said third AC/DC converters in said plurality of converter cells are connected in parallel with each other.

**5.** (AMENDED) A power converter as claimed in claim 3 or 4, wherein the AC side of said power converter is directly connected in each phase to a three-phase AC power supply system.

**6.** (AMENDED) A motor drive equipped with a power converter as claimed in any one of claims 1 to 5.

**7.** (AMENDED) A BTB system comprising a power converter as claimed in claim 1 or 2.

**8.** (AMENDED) A grid-linking inverter system for linking between a DC system and an AC system, comprising a power converter as claimed in any one of claims 3 to 5.

**9.** (DELETED)

**10.** (DELETED)

Statement under Art. 19.1 PCT
STATEMENT BASED ON THE PROVISION OF ARTICLE 19(1) OF THE PATENT COOPERATION TREATY
 The claims described in the attached amendment are related to the originally submitted claims as follows.
Claims 1 to 8 were amended.
Claims 9 to 10 were deleted.
